# DEMANDE DE BREVET EUROPEEN

(11) **EP 3 808 959 A1**
(43) Date de publication de la demande: **21.04.2021**
(21) Numéro de dépôt: 20200391.9
(22) Date de dépôt: 06.10.2020
(51) Int. Cl.: F02D 41/00, F02D 41/14, F02D 41/10

(54) **PROCÉDÉ DE CONTRÔLE DE LA SURALIMENTATION EN AIR D'UN MOTEUR À COMBUSTION**

(30) Priorité: 17.10.2019 FR 1911596
(71) Demandeur: Renault S.A.S., 92100 Boulogne-Billancourt (FR)
(72) Inventeur: THUILLIER, Laurent, 91220 Brétigny sur orge (FR)

(57) **Abrégé**

Ce procédé de contrôle de la suralimentation en air d'un moteur à combustion interne d'un véhicule automobile équipé d'un turbocompresseur de suralimentation comprenant une turbine entraînée en rotation par les gaz d'échappement du moteur et un compresseur de suralimentation entraîné par la turbine, comprenant la régulation de la pression régnant dans un collecteur d'admission du moteur, caractérisé en ce que la régulation de la pression du collecteur comprend une étape (E2) de détermination de la consigne du couple moteur suivie d'une étape (E3, E4) de régulation rapide mise en œuvre au moyen d'une logique floue ou d'un régulateur de type Proportionnel Intégral-Dérivé et comportant une première étape (E3) de régulation rapide autour d'une première valeur de consigne de pression de collecteur et une deuxième étape (E4) de régulation rapide autour d'une deuxième valeur de consigne de pression de collecteur inférieure à ladite première valeur mise en œuvre dès lors que la consigne de couple moteur dépasse un seuil de couple moteur.

## Description

### Domaine technique

L'invention concerne la commande de moteurs à combustion interne de véhicules automobiles.

Plus particulièrement, l'invention se rapporte au contrôle de la suralimentation en air de tels moteurs. La suralimentation est un système qui permet d'augmenter la pression dans le collecteur d'admission du moteur pour faire progresser les performances et le rendement du moteur.

Une application particulièrement intéressante de l'invention concerne le contrôle de la suralimentation en air d'un moteur de type Diesel suralimenté par un turbocompresseur.

Les moteurs suralimentés comprennent un turbocompresseur comprenant une turbine entraînée en rotation par les gaz d'échappement et un compresseur entraîné par la turbine et servant à augmenter la quantité d'air admise dans les cylindres.

A cet effet, la turbine est placée à la sortie du collecteur d'échappement tandis que le compresseur est monté sur le même axe que la turbine et est disposé en amont du collecteur d'admission.

La puissance fournie par les gaz d'échappement à la turbine peut être réglée en installant une soupape de décharge ou des ailettes qui influent sur le débit de gaz traversant la turbine ou la section de passage offerte à ces gaz.

Un actionneur est utilisé pour piloter l'ouverture et la fermeture de la soupape ou des ailettes sous le contrôle d'un signal de commande délivré par l'unité de contrôle électronique afin d'asservir la pression de suralimentation présente dans le collecteur d'admission sur une consigne de pression calculée par un calculateur appelé UCE ou Unité de Commande Electronique contenant l'ensemble des lois de commande et des paramètres de pilotage du moteur.

L'UCE recalcule sans cesse la consigne de pression de suralimentation, par exemple en fonction du régime du moteur et du débit de carburant, ou bien à partir d'une consigne de débit d'air et de richesse, et pilote la soupape ou les ailettes pour faire coïncider la pression régnant dans le collecteur d'admission et la consigne de pression.

Les turbocompresseurs étant de plus en plus sollicités, il est important de les piloter pour éviter leur détérioration et améliorer le comportement du véhicule, lors des accélérations, et en particulier pour augmenter la dynamique du moteur, c'est-à-dire sa capacité à monter rapidement en régime.

Lorsque le conducteur souhaite disposer de la puissance maximale du moteur, il enfonce la pédale d'accélérateur au maximum. Cette position de la pédale est traduite par l'UCE en une consigne de débit de carburant qui est limitée en régime transitoire par un seuil maximal acceptable fonction de la pression que le turbocompresseur est capable de supporter en régime stabilisé.

La régulation de la pression régnant dans le collecteur d'admission du moteur autour de la valeur de consigne de pression est classiquement réalisée au moyen de régulateurs dits rapides permettant au moteur de monter rapidement en régime, de type régulateur à élément de logique floue tel que décrit dans FR-A1-2 840 027, ou de type PID (Proportionnel, Intégral, Différentiel) d'après l'évolution de la différence entre la consigne de pression et la pression réelle mesurée.

Toutefois, cette stratégie de régulation rapide est difficile à mettre en œuvre lors de fortes accélérations dans la mesure où elle doit permettre d'asservir la pression régnant dans le collecteur sur la consigne de pression aussi bien en régime stabilisé qu'en régime transitoire, sans dépassement du seuil limite maximale acceptable.

En particulier, pour avoir une montée très rapide de la pression du collecteur vers la consigne, les procédés connus pour mettre en œuvre un contrôle de la suralimentation occasionnent des dépassements de consigne lors des phases transitoires, notamment à cause de l'inertie du turbo et de la dispersion de la commande.

Il est habituel de limiter la valeur des consignes de pression de collecteur à une valeur inférieure d'environ cent-cinquante millibars au seuil acceptable afin d'éviter des endommagements résultants par exemple de survitesses du turbo ou d'atteinte de pression maximale en cas de dépassement de consigne.

Néanmoins, une marge abaissant la consigne de la pression régnant dans le collecteur d'admission du moteur revient à une limitation des performances du moteur, et les solutions proposées dans l'état de la technique ne permettent pas de mettre en œuvre un asservissement de la consigne de suralimentation aussi bien en régime stabilisé qu'en régime transitoire en s'affranchissant de cette marge.

L'invention consiste donc à exploiter cette marge lorsque la suralimentation est établie, dans l'objectif d'accroitre le niveau de puissance du moteur. Autrement dit l'invention vise à pouvoir obtenir en fonctionnement stabilisé une pression de collecteur augmentée au plus près de la valeur acceptable que le turbocompresseur est capable de supporter en régime stabilisé.

1. L'invention a donc pour objet, selon un premier aspect, un procédé de contrôle de la suralimentation en air d'un moteur à combustion interne d'un véhicule automobile équipé d'un turbocompresseur de suralimentation comprenant une turbine entraînée en rotation par les gaz d'échappement du moteur et un compresseur de suralimentation entraîné par la turbine, comprenant la régulation de la pression régnant dans un collecteur d'admission du moteur, caractérisé en ce que la régulation de la pression du collecteur comprend une étape (E2) de détermination de la consigne du couple moteur suivie d'une étape (E3, E4) de régulation rapide mise en œuvre au moyen d'une logique floue ou d'un régulateur de type Proportionnel Intégral-Dérivé et comportant une première étape (E3) de régulation rapide autour d'une première valeur de consigne de pression de collecteur et une deuxième étape (E4) de régulation rapide autour d'une deuxième valeur de consigne de pression de collecteur inférieure à ladite première valeur mise en œuvre dès lors que la consigne de couple moteur dépasse un seuil de couple moteur.

De préférence, l'étape (E3, E4) de régulation rapide est suivie d'une étape (E5) de régulation lente de la pression du collecteur autour de la première valeur de consigne de pression de collecteur, mise en œuvre au moyen d'un régulateur de type Proportionnel pur ou de type Proportionnel Dérivé.

Par exemple, l'étape (E5) de régulation lente est mise en œuvre après une durée prédéterminée de mise en œuvre de la deuxième étape (E4) de régulation rapide.

Avantageusement, la durée prédéterminée de mise en œuvre de la deuxième étape (E4) de régulation rapide est comprise entre une et dix secondes.

Selon une forme de réalisation, la consigne de couple moteur est déterminée à partir du régime du moteur et d'une valeur de l'enfoncement de la pédale d'accélérateur du véhicule.

Dans un mode de réalisation du procédé, on vérifie si le point de fonctionnement correspondant au régime moteur et à la consigne de couple moteur correspond à une zone du champ de fonctionnement du moteur sensiblement proche du point de puissance maximale du moteur.

### Brève description des dessins

L'invention sera mieux comprise à l'étude détaillée du dessin annexé pris à titre d'exemple non limitatif, sur lequel :

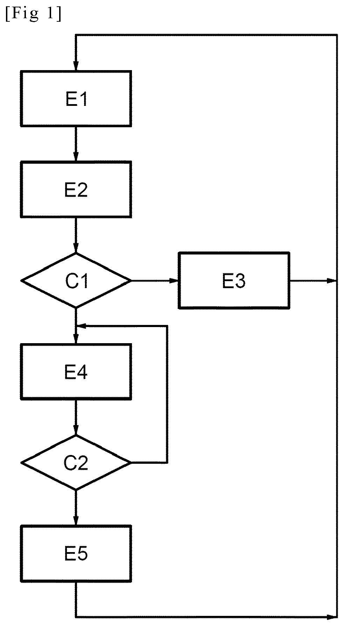

[Fig 1] détaille des étapes de la mise en œuvre d'une régulation de la pression du collecteur en exploitant la marge de suralimentation.

### Description détaillée

La Figure 1 se rapporte à la mise en œuvre d'une régulation optimisée de la suralimentation en air d'un moteur à combustion interne d'un véhicule automobile roulant et conventionnellement équipé d'un turbocompresseur de suralimentation comprenant essentiellement une turbine entraînée par les gaz d'échappement et un compresseur de suralimentation entraîné par la turbine monté sur le même axe que la turbine et assurant une compression de l'air, et d'une unité de commande électronique UCE qui récupère des signaux de mesure de la pression régnant dans le collecteur d'admission délivrés par des capteurs de mesure appropriés prévus à cet effet et qui agit sur un organe de réglage de la puissance des gaz d'échappement, par exemple une soupape de décharge ou sur les ailettes de la turbine, de manière à réguler la valeur de la pression régnant dans le collecteur d'admission autour de valeurs de consigne, l'unité UCE pouvant en outre assurer le contrôle de fonctionnement du moteur et régler le point de fonctionnement du moteur.

Ainsi, en se référant à la Figure 1, le procédé de régulation de la pression régnant dans le collecteur d'admission du moteur commence par une première étape E1 de mesure de variables d'état caractéristiques de la consigne du couple moteur courant, tels que le régime moteur ou l'enfoncement de la pédale du véhicule par le conducteur.

L'étape E1 est réalisée par exemple par l'UCE à partir des données de variables d'état collectées par des capteurs équipant le véhicule et mises à disposition par l'intermédiaire d'un bus de communication tel qu'un bus CAN du véhicule. L'UCE établit par exemple la liaison entre des capteurs de mesure physique et des réseaux de communication inter systèmes, par télémétrie ou privatifs. Elle peut comprendre un calculateur réalisé par exemple à partir d'un calculateur automobile comprenant un processeur.

L'étape E1 se poursuit par l'étape E2 de détermination de la consigne du couple moteur à partir des données collectées en étape E1.

Lors de l'étape E2, la consigne du couple moteur est calculée ou estimée par l'UCE préalablement configuré de façon connue par l'homme de l'art en utilisant par exemple des modèles de conception numérique.

L'étape E2 se poursuit par une étape C1 de comparaison de la consigne de couple moteur déterminée en étape E2 à une consigne de couple moteur maximum correspondant au couple moteur lors de l'enfoncement maximal de la pédale d'accélérateur.

Lors de l'étape C1, l'UCE peut vérifier si le point de fonctionnement correspondant au régime effectif et à la consigne de couple correspond à une zone du champ de fonctionnement du moteur correspondant au point de puissance maximale de celui-ci.

Ainsi, si la consigne de couple moteur est sensiblement proche de son maximum, l'étape E2 se poursuit par l'étape E4, sinon elle se poursuit par l'étape E3.

Lors de l'étape E3, l'UCE met en œuvre la première étape de régulation rapide élaborée à partir d'un régulateur de type PID (Proportionnel, Intégral, Différentiel) ou à logique floue qui permet d'asservir rapidement la pression de suralimentation sur une première valeur de consigne prédéterminée, ce qui entraînera un dépassement ponctuel de consigne.

Comme cela est connu en soi, la régulation rapide est mise en œuvre au moyen d'un intégrateur et d'un dérivateur afin d'élaborer un signal de commande destiné à la turbine pour asservir la pression du collecteur sur la consigne correspondante.

L'étape E3 renvoie à l'étape E1. Ainsi, tant que la régulation rapide ne correspond pas à la consigne de couple moteur maximum, la première étape de régulation rapide de la pression du collecteur est répétée de manière classique (PID, logique floue) via un signal de commande de l'actionneur de la turbine.

Le signal de consigne élaboré pour la première étape de régulation rapide E3 peut être un signal modulé en largeur d'impulsion permettant par exemple de commander la position des ailettes de la turbine au moyen d'un actionneur de type pneumatique ou électrique.

L'étape E4 correspond à la deuxième étape de régulation rapide de la pression du collecteur autour d'une deuxième valeur de consigne de régulation de pression de collecteur inférieure à la première valeur de consigne de régulation élaborée lors de l'étape E3.

L'étape E4 est mise en œuvre dès lors que la consigne de couple moteur atteint sensiblement un seuil de consigne de couple moteur, comme détecté lors de l'étape de comparaison C1.

Par exemple, l'étape E4 met en œuvre une régulation rapide de pression dans le collecteur autour d'une deuxième valeur abaissée de l'ordre de cent-cinquante millibars par rapport à la première valeur.

La marge entre la première et la deuxième valeur de régulation rapide peut être déterminée lors d'essais préalables en banc d'essai en utilisant la régulation prévue (PID ou logique floue par exemple), en mesurant la valeur du dépassement de consigne de couple moteur occasionnée lors de cette régulation, et en prenant une valeur égale à ce dépassement, ou légèrement supérieure à ce dépassement.

La deuxième étape de régulation rapide E4 est toujours mise en œuvre par une méthode classique type PID ou logique floue, occasionnant un dépassement de consigne à cause de la rapidité de la régulation.

Dans cet exemple de réalisation, la régulation de la pression dans le collecteur comprend une mesure de ladite pression que l'on asservit sur une valeur de consigne, et qu'il est également possible, en variante, de procéder à une estimation de ladite pression, par exemple à l'aide d'un estimateur d'état.

L'étape E4 se poursuit par une étape C2 de temporisation.

Lors de l'étape C2, la régulation rapide appliquée de la deuxième étape de régulation rapide E4 est maintenue pendant une durée prédéterminée.

Par exemple, la durée prédéterminée de mise en œuvre de la deuxième étape de régulation rapide est comprise entre une et dix secondes, préférentiellement sensiblement de l'ordre de cinq secondes.

Dans un mode de réalisation, cette durée est déterminée, lors d'une série d'essais préalables effectués par exemple en roulement, comme la durée moyenne après enfoncement maximal de l'accélérateur à laquelle la valeur réelle de la pression du collecteur atteint ou dépasse sa valeur maximum de pression admissible malgré la consigne de régulation rapide autour de la deuxième valeur de consigne de pression de collecteur.

Le seuil de pression de collecteur admissible est calibré lors de la mise au point du turbocompresseur de sorte que lorsque la pression dépasse ledit seuil, la pression peut à très court terme endommager les composants mécaniques couplés au collecteur.

Tant que ne s'est pas écoulée la durée prédéterminée de régulation rapide autour de la deuxième valeur, l'étape C2 renvoie à l'étape E4, sinon elle mène à l'étape E5.

Lors de l'étape E5, l'UCE régule lentement la pression de collecteur autour d'une nouvelle consigne sensiblement proche de la première valeur ou sensiblement égale à la pression maximale admissible dans le collecteur sans marge.

L'UCE effectue cette régulation lente grâce à un régulateur qui ne donnera lieu à aucun dépassement de consigne, tel qu'un régulateur de type Proportionnel pur (P) ou de type Proportionnel-Dérivé (PD).

On obtient alors une régulation lente par le bas de la pression dans le collecteur, vers la pression maximale admissible dans le collecteur, ce qui permet de bénéficier d'une plus grande puissance moteur en régime stationnaire tout en prévenant un dépassement de pression maximale admissible dans le collecteur.

Ains, les étapes E4 et E5 constituent une chaîne de régulations successives, rapide puis lente, de la pression dans le collecteur.

L'étape E5 renvoie à l'étape E1, par exemple après une temporisation ou lorsque la consigne de régime moteur n'est plus maximale.

Les étapes E1 à E5 sont effectuées successivement à intervalle régulier, par exemple toutes les dix millisecondes.

On bénéficie ainsi d'une première étape de régulation très rapide puis d'une seconde étape plus lente qui permet d'approcher la consigne finale de couple « par le bas » (sans dépassement) de sorte que cette consigne n'a plus besoin de tenir compte d'une marge qui abaisse la puissance moteur disponible.

Aucun moyen physique supplémentaire aux dispositifs connus n'est nécessaire pour la mise en œuvre du procédé.

## Revendications

**2.** Procédé de contrôle de la suralimentation en air d'un moteur à combustion interne d'un véhicule automobile équipé d'un turbocompresseur de suralimentation comprenant une turbine entraînée en rotation par les gaz d'échappement du moteur et un compresseur de suralimentation entraîné par la turbine, comprenant la régulation de la pression régnant dans un collecteur d'admission du moteur, **caractérisé en ce que** la régulation de la pression du collecteur comprend une étape (E2) de détermination de la consigne du couple moteur suivie d'une étape (E3, E4) de régulation rapide mise en œuvre au moyen d'une logique floue ou d'un régulateur de type Proportionnel Intégral-Dérivé et comportant une première étape (E3) de régulation rapide autour d'une première valeur de consigne de pression de collecteur et une deuxième étape (E4) de régulation rapide autour d'une deuxième valeur de consigne de pression de collecteur inférieure à ladite première valeur mise en œuvre dès lors que la consigne de couple moteur dépasse un seuil de couple moteur.

**3.** Procédé selon la revendication précédente, dans lequel l'étape (E3, E4) de régulation rapide est suivie d'une étape (E5) de régulation lente de la pression du collecteur autour de la première valeur de consigne de pression de collecteur, mise en œuvre au moyen d'un régulateur de type Proportionnel pur ou de type Proportionnel Dérivé.

**4.** Procédé selon la revendication 2, dans lequel l'étape (E5) de régulation lente est mise en œuvre après une durée prédéterminée de mise en œuvre de la deuxième étape (E4) de régulation rapide.

**5.** Procédé selon la revendication 3, dans lequel la durée prédéterminée de mise en œuvre de la deuxième étape (E4) de régulation rapide est comprise entre une et dix secondes.

**6.** Procédé selon l'une quelconque des revendications précédentes, dans lequel la consigne de couple moteur est déterminée à partir du régime du moteur et d'une valeur de l'enfoncement de la pédale d'accélérateur du véhicule.

**7.** Procédé selon la revendication 5, dans lequel on vérifie si le point de fonctionnement correspondant au régime moteur et à la consigne de couple moteur correspond à une zone du champ de fonctionnement du moteur sensiblement proche du point de puissance maximale du moteur.
